# EUROPEAN PATENT APPLICATION

(11) **EP 2 865 868 A1**
(43) Date of publication of application: **29.04.2015**
(21) Application number: 12879920.2
(22) Date of filing: 25.06.2012
(51) Int. Cl.: F02D 13/02, F02D 41/06, F02D 45/00

(54) **CONTROL DEVICE FOR INTERNAL COMBUSTION ENGINE**

(71) Applicant: Toyota Jidosha Kabushiki Kaisha, Toyota-shi, Aichi-ken, 471-8571 (JP)
(72) Inventor: MATSUDA, Kazuhisa, Toyota-shi, Aichi-ken, 471-8571 (JP); TOMIMATSU, Makoto, Toyota-shi, Aichi-ken, 471-8571 (JP); TSUKAGOSHI, Takahiro, Toyota-shi, Aichi-ken, 471-8571 (JP); MORITA, Kouji, Toyota-shi, Aichi-ken, 471-8571 (JP)
(74) Representative: Winter, Brandl, Fürniss, Hübner, Röss, Kaiser, Polte - Partnerschaft mbB
(86) International application number: PCT/JP2012/066155
(87) International publication number: WO 2014/002164

(57) **Abstract**

An object of this invention is to appropriately control valve timings based on a fuel property and an engine temperature to improve exhaust emissions. An engine 10 is equipped with a function that drives variable valve mechanisms 36 and 38 to execute intake valve retarded-opening control and exhaust valve early-closing control. An ECU 60 variably sets a low-temperature determination value T1 based on an alcohol concentration in a fuel. If a water temperature Thw of the engine is equal to or less than the low-temperature determination value T1, the ECU 60 prohibits the intake valve retarded-opening control and permits the exhaust valve early-closing control. Consequently, during cold operation it is possible to avoid a deterioration in combustion properties (deterioration in in-cylinder turbulence) caused by intake valve control and thereby suppress a deterioration in exhaust emissions. Further, because exhaust valve control is permitted, for example, a negative overlap period that satisfies a control request can be secured by advancing the closing timing of the exhaust valve 34. Accordingly, exhaust emissions and catalyst warm-up performance can be improved.

## Description

### Technical Field

The present invention relates to a control device for an internal combustion engine, and more particularly to a control device for an internal combustion engine that includes a variable valve mechanism on an air intake side and an exhaust side.

### Background Art

The conventional technology includes a control device for an internal combustion engine that is equipped with a variable valve mechanism on an air intake side and an exhaust side, as disclosed, for example, in Patent Literature 1 (Japanese Patent Laid-Open No. 2010-185300). In the conventional technology, for example, a configuration is adopted so as to determine the ease of fuel atomization based on an alcohol concentration in the fuel or the temperature of engine cooling water, and to control a valve timing of an intake valve or an exhaust valve based on the ease of fuel atomization.

The applicants are aware of the following literature, which includes the above described literature, as literature related to the present invention.

### Citation List

### Patent Literature

Patent Literature 1: Japanese Patent Laid-Open No. 2010-185300
Patent Literature 2: Japanese Patent Laid-Open No. 5-272364
Patent Literature 3: Japanese Patent Laid-Open No. 2007-132326
Patent Literature 4: Japanese Patent Laid-Open No. 2000-87769
Patent Literature 5: Japanese Patent Laid-Open No. 2007-16710
Patent Literature 6: Japanese Patent Laid-Open No. 2006-97602

### Summary of Invention

### Technical Problem

In the above described conventional technology there is the problem that, when changing the opening timing of the intake valve, in-cylinder turbulence (the degree of air agitation by a turbulent flow in a cylinder) deteriorates, and the combustion properties deteriorate. In particular, when such kind of deterioration in the combustion properties occurs during cold operation, there is the problem that the exhaust emissions deteriorate noticeably.

The present invention has been made to solve the above described problem, and an object of the present invention is to provide a control device for an internal combustion engine that is capable of appropriately controlling a valve timing based on a property of a fuel and an engine temperature and thereby improve exhaust emissions.

### Means for Solving the Problem

A first aspect of the present invention is a control device for internal combustion engine, comprising:
an intake variable valve mechanism for changing a valve timing of an intake valve;
an exhaust variable valve mechanism for changing a valve timing of an exhaust valve;
engine temperature acquisition means for acquiring an engine temperature of the internal combustion engine;
intake valve control means for executing intake valve control that drives the intake variable valve mechanism to change a valve timing of the intake valve;
exhaust valve control means for executing exhaust valve control that drives the exhaust variable valve mechanism to change a valve timing of the exhaust valve;
low-temperature determination value varying means for variably setting a low-temperature determination value based on a fuel property;
intake valve control prohibiting means for prohibiting execution of the intake valve control in at least a case where the engine temperature is less than or equal to the low-temperature determination value; and
exhaust valve control permitting means for permitting execution of the exhaust valve control in at least a case where the engine temperature is less than or equal to the low-temperature determination value.

A second aspect of the present invention, further comprising:
a catalyst that purifies an exhaust gas that is discharged from a cylinder of the internal combustion engine;
exhaust air-fuel ratio acquisition means for acquiring an exhaust air-fuel ratio of the internal combustion engine; and
intake valve control permitting means for, in a case where it is estimated that the exhaust air-fuel ratio will fall within a predetermined air-fuel ratio range in which purification by the catalyst is possible even if the intake valve control is executed, permitting execution of the intake valve control regardless of the engine temperature.

A third aspect of the present invention, further comprising:
alcohol concentration acquiring means for acquiring an alcohol concentration in a fuel; and
intake valve control permitting means for permitting execution of the intake valve control in a case where the engine temperature is higher than the low-temperature determination value and the alcohol concentration is greater than or equal to a predetermined permissible concentration that is set based on exhaust emissions.

A fourth aspect of the present invention, further comprising exhaust valve advancement control means for, in a case of executing the intake valve control, advancing a valve timing of the exhaust valve before the intake valve control is started, and after an operation to start the intake valve control is completed, returning the valve timing of the exhaust valve to a timing thereof prior to the advancing thereof.

A fifth aspect of the present invention, wherein the intake valve control is control that retards at least an opening timing of the intake valve, and the exhaust valve control is control that advances at least a closing timing of the exhaust valve.

### Advantageous Effects of Invention

According to the first invention, during cold operation, a deterioration in combustion properties (deterioration in the in-cylinder turbulence) that is caused by intake valve control can be avoided to thereby suppress a deterioration in the exhaust emissions. Further, since exhaust valve control is permitted, for example, a negative overlap period that satisfies a control request can be secured by advancing the closing timing of the exhaust valve, and exhaust emissions can be improved even in a state in which intake valve control is prohibited.

According to the second invention, even if the engine temperature is equal to or less than a low-temperature determination value, intake valve control can be executed in a case where the engine is operating in an air-fuel ratio range in which it is possible to permit a deterioration in combustion properties due to intake valve control. It is thereby possible to quickly warm up a catalyst while suppressing a deterioration in the exhaust emissions. Accordingly, an operating range in which the intake valve control is executable can be extended, and engine performance during cold operation can be improved.

According to the third invention, even if combustion properties deteriorate due to execution of intake valve control, the intake valve control can be executed if an effect that reduces exhaust emissions that is achieved by the intake valve control is greater than an effect produced by the deterioration in the combustion properties. It is thereby possible to quickly warm up a catalyst while suppressing a deterioration in the exhaust emissions. Accordingly, an operating range in which the intake valve control is executable can be extended, and engine performance during cold operation can be improved.

According to the fourth invention, even in a case where the combustion properties deteriorated more than expected due to execution of intake valve control, the valve timing of the exhaust valve can be advanced to suppress a deterioration in the exhaust emissions. That is, the exhaust emissions can be improved to a degree that corresponds to the amount by which the valve timing of the exhaust valve is advanced, and thus the operating range in which the intake valve control is executable can be extended.

According to the fifth invention, the intake valve control can be constituted by intake valve retarded-opening control that retards at least the opening timing of the intake valve. Further, the exhaust valve control can be constituted by exhaust valve early-closing control that advances at least the closing timing of the exhaust valve.

### Brief Description of Drawings

[Figure 1] Figure 1 is a configuration diagram for describing the system configuration of Embodiment 1 of the present invention.
[Figure 2] Figure 2 is an explanatory view that illustrates one example of valve timings according to the conventional technology.
[Figure 3] Figures 3(A) and (B) are explanatory views that illustrate an example of the valve timings according to intake valve retarded-opening control in Embodiment 1.
[Figure 4] Figure 4 is a timing chart that illustrates a state in which the simultaneous intake/exhaust valve control is executed with respect to a non-alcohol fuel and a high-alcohol-concentration fuel, respectively.
[Figure 5] Figure 5 is a timing chart that illustrates timings when executing the intake valve retarded-opening control.
[Figure 6] Figure 6 is a characteristics diagram that illustrates a state in which in-cylinder turbulence occurs when executing the intake valve retarded-opening control.
[Figure 7] Figure 7 is a timing chart that illustrates one example of the intake valve retarded-opening prohibition control according to Embodiment 1 of the present invention.
[Figure 8] Figure 8 is a characteristics diagram that illustrates alcohol distillation rates at respective water temperatures and alcohol concentrations.
[Figure 9] Figure 9 is a characteristics diagram illustrating the relation between the alcohol concentration in the fuel and the low-temperature determination value.
[Figure 10] Figure 10 is a timing chart that illustrates one example of a state in which the intake valve retarded-opening control is permitted by the first intake valve retarded-opening permission control.
[Figure 11] Figure 11 is an explanatory view that illustrates valve timing control and exhaust emissions (NMOG + NOx emissions) in respective operating ranges when using non-alcohol fuel.
[Figure 12] Figure 12 is an explanatory view that illustrates valve timing control and exhaust emissions in respective operating ranges when using high-alcohol-concentration fuel (for example, a fuel E85 in which the alcohol concentration is 85%).
[Figure 13] Figure 13 is a characteristics diagram illustrating the relation between the air-fuel ratio determination value α and an alcohol concentration in the fuel.
[Figure 14] Figure 14 is a characteristics diagram illustrating the relation between the catalyst temperature determination value β and the alcohol concentration.
[Figure 15] Figure 15 is a timing chart that illustrates one example of a state in which the intake valve retarded-opening control is permitted by the second intake valve retarded-opening permission control in Embodiment 1 of the present invention.
[Figure 16] Figure 16 is a characteristics diagram for determining a permissible concentration for the intake valve retarded-opening control.
[Figure 17] Figure 17 is a timing chart that illustrates one example of the exhaust valve advancement control that is executed in synchrony with the intake valve retarded-opening control.
[Figure 18] Figure 18 is a flowchart that illustrates control executed by the ECU according to Embodiment 1 of the present invention.

### Description of Embodiment

### Embodiment 1

### [Configuration of Embodiment 1]

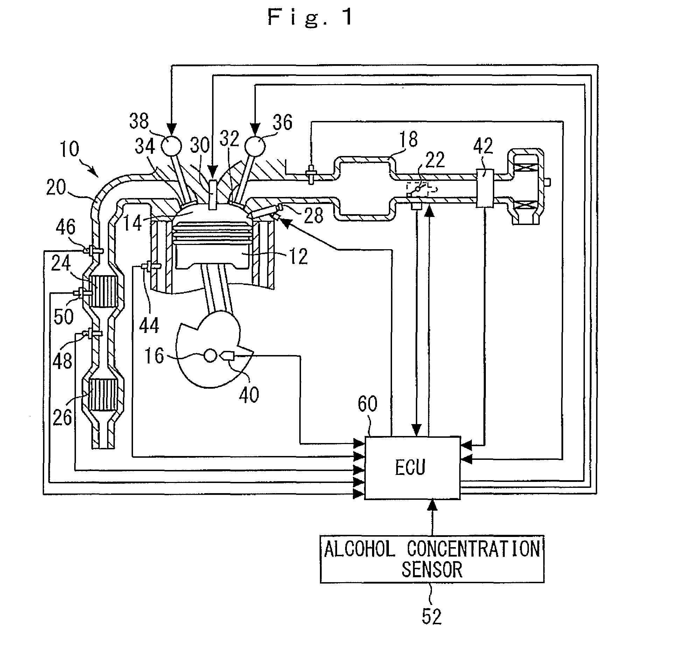

Embodiment 1 of the present invention will be described hereunder with reference to Figure 1 to Figure 18. Figure 1 is a configuration diagram for describing the system configuration of Embodiment 1 of the present invention. The system of the present embodiment includes an engine 10 as a multi-cylinder internal combustion engine. Although only one cylinder of the engine 10 is shown in Figure 1, the present invention may be applied to an engine with an arbitrary number of cylinders including an engine with a single cylinder. The engine 10 is mounted in a vehicle such as, for example, an FFV (flexible-fuel vehicle), and an alcohol fuel containing methanol, ethanol or the like can be used in the engine 10. In the following description, a fuel containing ethanol is exemplified as an alcohol fuel.

In each cylinder of the engine 10, a combustion chamber 14 is defined by a piston 12, and the piston 12 is connected to a crankshaft 16 of the engine. The engine 10 also includes an intake passage 18 that draws intake air into each cylinder, and an exhaust passage 20 through which exhaust gas from each cylinder is discharged. An electronically controlled throttle valve 22 that adjusts an intake air amount based on a degree of accelerator opening or the like is provided in the intake passage 18. Catalysts 24 and 26 that purify exhaust gas are disposed in the exhaust passage 20. Three-way catalysts can be used as the catalysts 24 and 26.

Each cylinder is provided with a fuel injection valve 28 that injects fuel into the combustion chamber 14, a spark plug 30 that ignites an air-fuel mixture in the cylinder, an intake valve 32 that opens and closes the intake passage 18 with respect to the inside of the cylinder, and an exhaust valve 34 that opens and closes the exhaust passage 20 with respect to the inside of the cylinder. Further, the engine 10 is equipped with an intake variable valve mechanism 36 that variably sets a valve timing (opening/closing timing and phase) of the intake valve 32, and an exhaust variable valve mechanism 38 that variably sets a valve timing of the exhaust valve 34. The variable valve mechanisms 36 and 38 are constituted, for example, by a swing-arm type variable valve mechanism as disclosed in Japanese Patent Laid-Open No. 2007-132326, a VVT (variable valve timing system) as disclosed in Japanese Patent Laid-Open No. 2000-87769, or an electromagnetically-driven valve mechanism as disclosed in Japanese Patent Laid-Open No. 2007-16710. Further, a working angle varying-type variable valve mechanism that is capable of changing a working angle together with the opening and closing timings of a valve as disclosed, for example, in Japanese Patent Laid-Open No. 2006-97602 may also be used as the variable valve mechanisms 36 and 38.

The system of the present embodiment is equipped with a sensor system that includes various sensors that are required for operation of the engine and vehicle, and an ECU (electronic control unit) 60 for controlling the operating state of the engine 10. First, the sensor system will be described. A crank angle sensor 40 outputs a signal that is synchronous with rotation of the crankshaft 16. An airflow sensor 42 detects an intake air amount, and a water temperature sensor 44 detects a water temperature Thw of engine cooling water. According to the present embodiment, the water temperature sensor 44 constitutes engine temperature acquisition means, and the water temperature Thw corresponds to an engine temperature in which the temperature state of the engine is reflected. Further, a main air-fuel ratio sensor 46 detects an exhaust air-fuel ratio on an upstream side of the catalyst 24 as a continuous value, and constitutes exhaust air-fuel ratio acquisition means. A sub-O₂ sensor 48 detects the oxygen concentration in exhaust gas between the catalysts 24 and 26.

A catalyst temperature sensor 50 detects a temperature (bed temperature) Ts of the catalyst 24. Note that, according to the present invention, a configuration may also be adopted in which the catalyst temperature sensor 50 is not used, and the catalyst temperature is estimated based on a parameter in which the operating state of the engine is reflected (for example, an integrated value of the intake air amount, or the exhaust air-fuel ratio). Further, an alcohol concentration sensor 52 constitutes alcohol concentration detection means for detecting an alcohol concentration in the fuel. The sensor system also includes a throttle sensor that detects a degree of opening of the throttle valve 22 (degree of throttle opening), a degree of accelerator opening sensor that detects a degree of accelerator opening, an intake air temperature sensor that detects the temperature of the intake air and the like.

The ECU 60 is constituted by an arithmetic processing apparatus that includes a storage circuit such as a ROM, a RAM, or a non-volatile memory, and an input/output circuit. The various sensors described above are connected to an input side of the ECU 60. Various actuators including the throttle valve 22, the fuel injection valve 28, the spark plug 30, and the variable valve mechanisms 36 and 38 are connected to an output side of the ECU 60. The ECU 60 performs operation control by detecting operating information of the engine by means of the sensor system, and driving each actuator based on the detection result. More specifically, the ECU 60 detects the number of engine revolutions and the crank angle based on the output of the crank angle sensor 42, and calculates the engine load based on an intake air amount that is detected by the airflow sensor 44 and the number of engine revolutions. Further, the ECU 60 determines the fuel injection timing and ignition timing and the like based on a detection value of the crank angle. The ECU 60 calculates a fuel injection amount based on the intake air amount and the engine load and the like, and drives the fuel injection valve 28 as well as the spark plug 30.

### [Features of Embodiment 1]

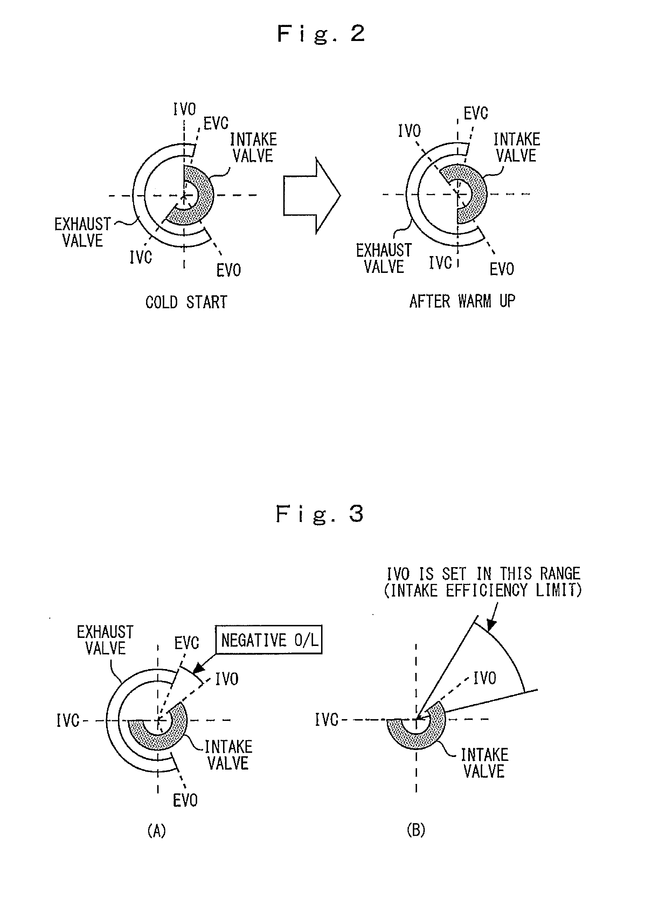

In the present embodiment, a configuration is adopted that executes intake valve retarded-opening control (intake valve control) and/or exhaust valve early-closing control (exhaust valve control) based on the operating state of the engine. First, the conventional technology will be described. Figure 2 is an explanatory view that illustrates one example of valve timings according to the conventional technology. It is assumed that, in Figure 2, reference characters "IVO" and "IVC" denote the opening timing and closing timing of the intake valve 32, respectively, and reference characters "EVO" and "EVC" denote the opening timing and closing timing of the exhaust valve 34, respectively. According to the conventional technology, for example, during cold operation (particularly, at cold starting), the EVC is set further to the retardation side than the IVO to provide an overlap period in which both of the intake valve 32 and the exhaust valve 34 are in an open state. Note that, the above described IVO, IVC, EVO and EVC are controlled by the ECU 60 through the variable valve mechanisms 36 and 38.

### (Intake valve retarded-opening control)

Figures 3(A) and (B) are explanatory views that illustrate an example of the valve timings according to intake valve retarded-opening control in Embodiment 1 of the present invention. Figure 3(A) illustrates valve timings on an air intake side and an exhaust side, and Figure 3(B) illustrates a setting range of valve timings on the air intake side. Note that Figure 3(A) illustrates an example of control in which intake valve retarded-opening control and exhaust valve early-closing control are executed simultaneously (simultaneous intake/exhaust valve control). The intake valve retarded-opening control retards (retards opening) the IVO in comparison to the conventional technology, for example, during cold operation or the like when the water temperature is less than or equal to a predetermined control start temperature. As a result, a negative overlap period (negative O/L) is generated in which both of the intake valve 32 and the exhaust valve 34 close, or the relevant period is increased. According to the intake valve retarded-opening control, the intake air flow rate is increased during cold operation to promote the mixing of injected fuel and air, and atomization and vaporization of fuel can also be promoted. It is thereby possible to quickly warm up a catalyst, while also improving exhaust emissions.

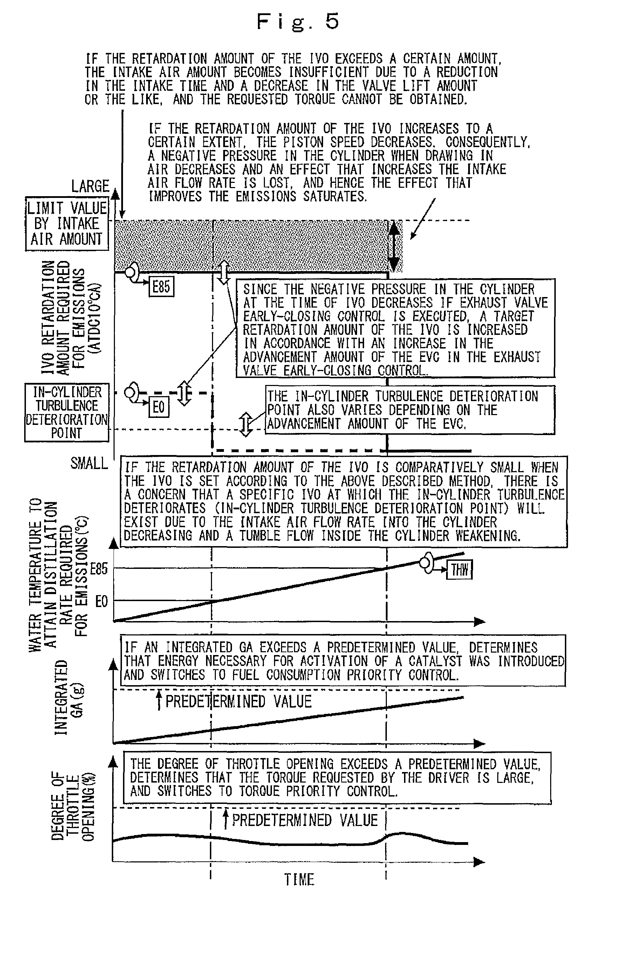

Further, a fuel deterioration point varies depending on a fuel property (for example, the alcohol concentration in the fuel). Therefore, the control start temperature with respect to the intake valve retarded-opening control and a retardation amount of the IVO are variably set based on the alcohol concentration in the fuel. As one example, the higher that the alcohol concentration is, the higher the temperature to which the control start temperature is set, and the higher the range of temperatures up to which the intake valve retarded-opening control is executed. Further, as shown in Figure 3(B), the setting range of the retardation amount is defined based on an air intake efficiency limit or the like that is not affected by a fuel property. On the other hand, in the case of non-alcohol fuel (E0) such as gasoline in which the alcohol concentration is zero, the combustion temperature will rise and the discharged amount of NOx will increase if the intake valve retarded-opening control is executed during cold operation, and therefore the intake valve retarded-opening control is not executed. Further, as shown in Figure 5 that is described later, a configuration may be adopted that, in a case where the degree of throttle opening exceeds a predetermined value, determines that the torque requested by the driver is large, and ends the intake valve retarded-opening control and switches to torque priority control. In addition, a configuration may also be adopted that, in a case where an integrated value of the intake air amount (integrated GA) exceeds a predetermined value, determines that energy necessary for activation of a catalyst was introduced, and ends the intake valve retarded-opening control and switches to fuel consumption priority control.

### (Exhaust valve early-closing control)

As shown in Figure 3(A), during the aforementioned cold operation or the like, the exhaust valve early-closing control advances the EVC (closes the exhaust valve early) in comparison to the conventional technology, and thereby increases the amount of exhaust gas remaining in the cylinder (internal EGR amount). According to the exhaust valve early-closing control, even in a case where it is difficult to execute the intake valve retarded-opening control, the absence of the effect of the intake valve retarded-opening control can be compensated for. That is, for example, when the intake variable valve mechanism 36 is constituted by a hydraulic VVT or the like, in some cases the intake valve retarded-opening control cannot be executed when the engine is cold. Even in such cases, the exhaust valve early-closing control can secure an overlap period of a size that satisfies a control request by retarding the EVC.

The following actions and effects can be obtained in a case where the simultaneous intake/exhaust valve control that combines the intake valve retarded-opening control and the exhaust valve early-closing control is executed. According to the simultaneous intake/exhaust valve control, in addition to the effects of the above described intake valve retarded-opening control, a negative overlap period can be increased and high-temperature exhaust gas that remained inside the cylinders can be caused to flow back (can be blown back) to an intake port. As a result, the temperature inside the intake port can be increased to promote vaporization of fuel and, furthermore, HC that was scraped up by the piston is trapped inside the cylinder and thus the discharged amount of HC can be reduced.

Note that the amount by which to advance the EVC in the simultaneous intake/exhaust valve control is preferably determined based on the alcohol concentration in the fuel (or the IVO) and the size of the negative overlap period. Further, when determining the advancement amount of the EVC based on the negative overlap period, in a case where the EVC is set to a timing that is on the retardation side relative to the intake top dead center, since the effect of the exhaust valve early-closing control cannot be obtained, in such a case it is preferable to define the advancement amount of the EVC as an advancement amount from the intake top dead center.

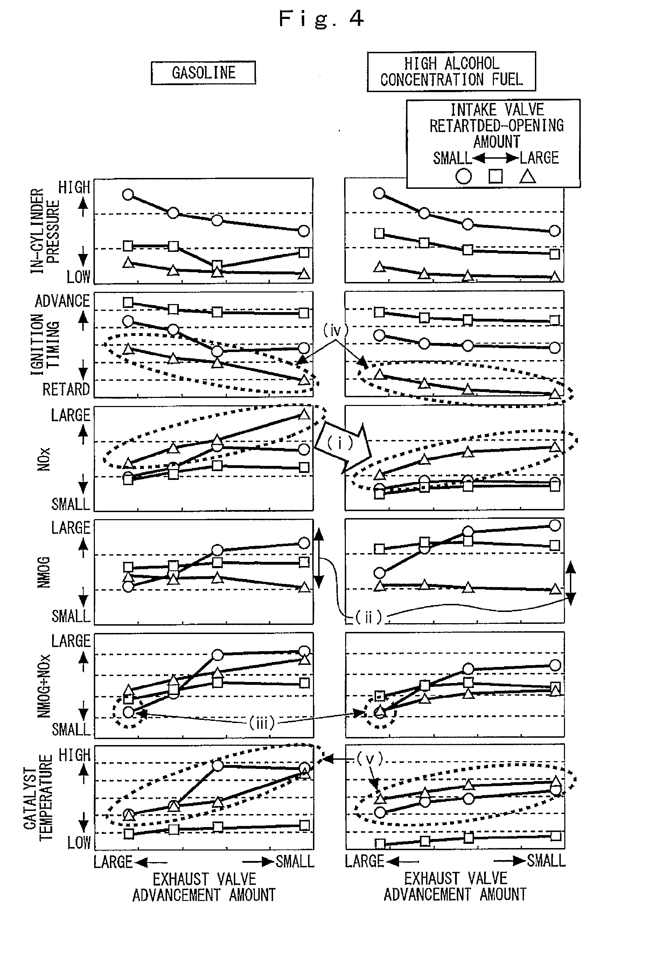

In addition, the following actions and effects can be obtained in the case of executing the simultaneous intake/exhaust valve control in a state in which the alcohol concentration in the fuel is high. Figure 4 is a timing chart that illustrates a state in which the simultaneous intake/exhaust valve control is executed with respect to a non-alcohol fuel and a high-alcohol-concentration fuel, respectively. In general, when using a non-alcohol fuel, although an effect that improves combustion is obtained by the intake valve retarded-opening control, the combustion temperature rises and the discharged amount of NOx is liable to increase. However, when using a high-alcohol-concentration fuel, since a large amount of moisture is generated in comparison to a non-alcohol fuel, the combustion temperature decreases. As a result, as shown in (i) in Figure 4, an increase in the NOx discharge amount that is caused by the intake valve retarded-opening control can be lessened.

Further, since a large portion of a high-alcohol-concentration fuel is constituted by an alcohol (ethanol) component that has a high boiling point, in a low temperature region it is difficult for the fuel to vaporize. Consequently, NMOG emissions (the total amount of nonmethane organic gas and hydrocarbons and the like contained in exhaust gas) deteriorate. However, when the simultaneous intake/exhaust valve control is executed, since vaporization of an alcohol component is effectively promoted, as shown in (ii) in Figure 4, the NMOG emissions can be reduced. Therefore, as shown in (iii) in Figure 4, when (NMOG + NOx) emissions of non-alcohol fuel and high-alcohol-concentration fuel are compared, in the case of the non-alcohol fuel, the various factors are lowest when only the exhaust valve early-closing control is executed. In contrast, in the case of the high-alcohol-concentration fuel, because of the effects illustrated in the aforementioned (i) and (ii), the various factors are lowest when the simultaneous intake/exhaust valve control is executed.

Further, since alcohol fuel is fuel that includes oxygen, the combustion speed thereof is fast, and the requested ignition timing shifts to the retardation side in comparison to non-alcohol fuel. In addition, by executing the intake valve retarded-opening control, as shown in (iv) in Figure 4, a region in which retardation is possible increases. Accordingly, when using high-alcohol-concentration fuel, by combining the intake valve retarded-opening control and the exhaust valve early-closing control, as shown in (v) in Figure 4, the catalyst temperature can be efficiently improved in comparison to non-alcohol fuel.

### (Problems concerning intake valve retarded-opening control)

Figure 5 is a timing chart that illustrates timings when executing the intake valve retarded-opening control. As shown in Figure 5, in the intake valve retarded-opening control, if the retardation amount of the IVO exceeds a certain amount, the intake air amount becomes insufficient due to a reduction in the intake time and a decrease in the valve lift amount or the like, and the requested torque cannot be obtained. Further, if the retardation amount of the IVO increases to a certain extent, the piston speed decreases. Consequently, a negative pressure in the cylinder when drawing in air decreases and an effect that increases the intake air flow rate is lost, and hence the effect that improves the emissions saturates. Therefore, the retardation amount of the IVO is set as a retardation amount within a range which satisfies a demanded intake air amount and which extends up to a retardation amount at which the effect that improves the emissions saturates. Further, since the negative pressure in the cylinder at the time of IVO decreases if exhaust valve early-closing control is executed, it is preferable that a target retardation amount of the IVO according to intake valve retarded-opening control is increased in accordance with an increase in the advancement amount of the EVC in the exhaust valve early-closing control.

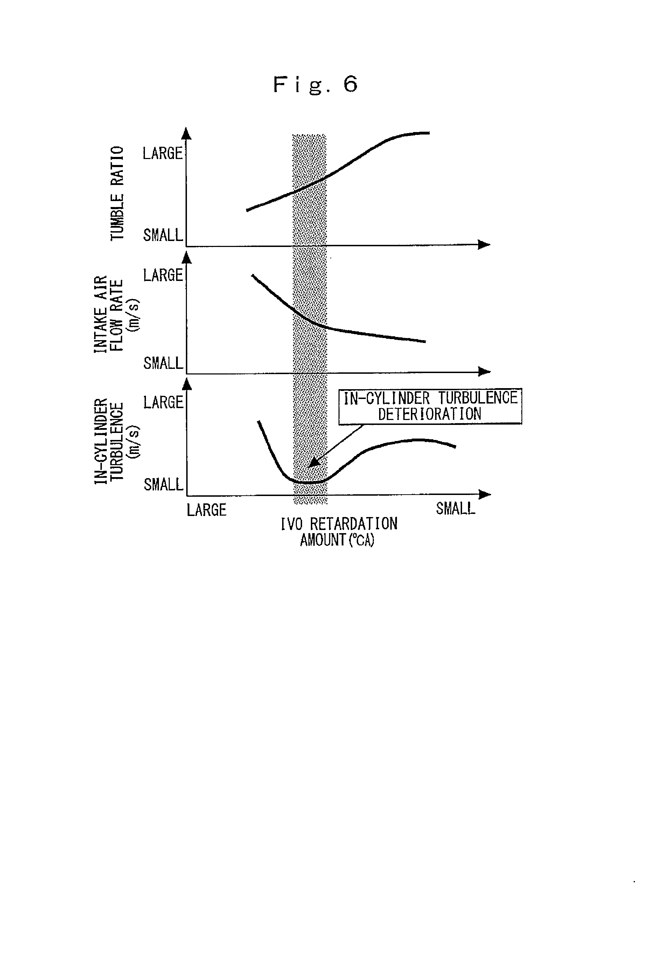

On the other hand, if the retardation amount of the IVO is comparatively small when the IVO is set according to the above described method, there is a concern that a specific IVO at which the in-cylinder turbulence deteriorates (in-cylinder turbulence deterioration point) will exist due to the intake air flow rate into the cylinder decreasing and a tumble flow inside the cylinder weakening. The in-cylinder turbulence deterioration point also varies depending on the advancement amount of the EVC. Figure 6 is a characteristics diagram that illustrates a state in which in-cylinder turbulence occurs when executing the intake valve retarded-opening control. In the vicinity of the in-cylinder turbulence deterioration point, since the degree of air agitation by a turbulent flow in the cylinder decreases, there is the problem that combustion properties and exhaust emissions deteriorate.

### (Intake valve retarded-opening prohibition control)

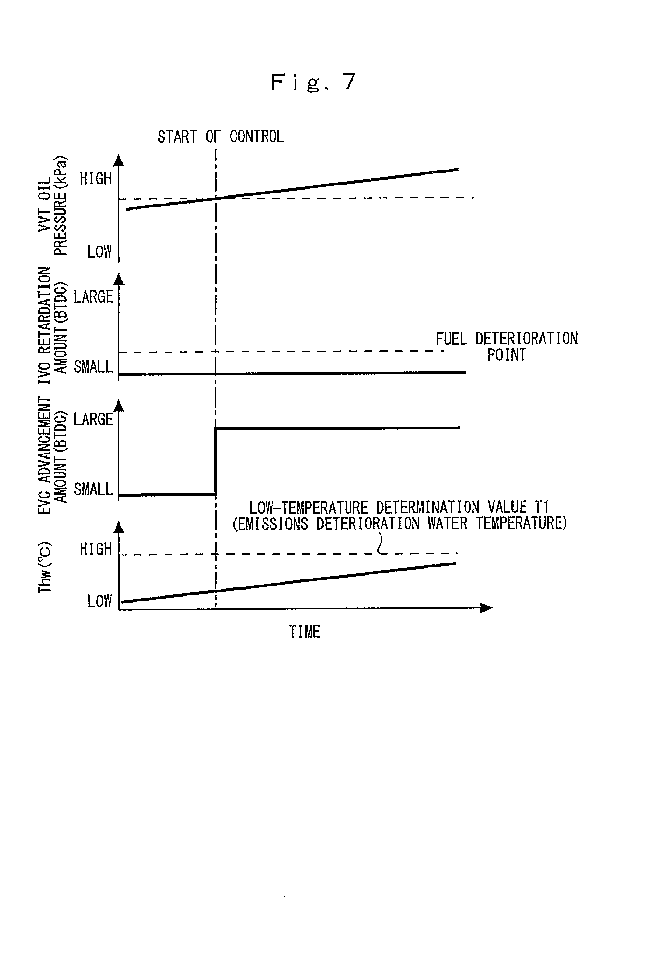

Therefore, in the present embodiment a configuration is adopted that executes intake valve retarded-opening prohibition control in a case where a low-temperature determination value T1 is calculated based on an alcohol concentration E1 in the fuel, and the water temperature Thw is less than or equal to the low-temperature determination value T1. Figure 7 is a timing chart that illustrates one example of the intake valve retarded-opening prohibition control according to Embodiment 1 of the present invention. As shown in Figure 7, in the intake valve retarded-opening prohibition control, the intake valve retarded-opening control is prohibited and the exhaust valve early-closing control is permitted.

According to the intake valve retarded-opening prohibition control, during cold operation a deterioration in the combustion properties (deterioration in the in-cylinder turbulence) that is caused by the intake valve retarded-opening control can be avoided to thereby suppress a deterioration in the exhaust emissions. Further, since the exhaust valve early-closing control is permitted, a negative overlap period that satisfies a control request can be secured by advancing the EVC, and thus the exhaust emissions can be improved even in a state in which the intake valve retarded-opening control is prohibited.

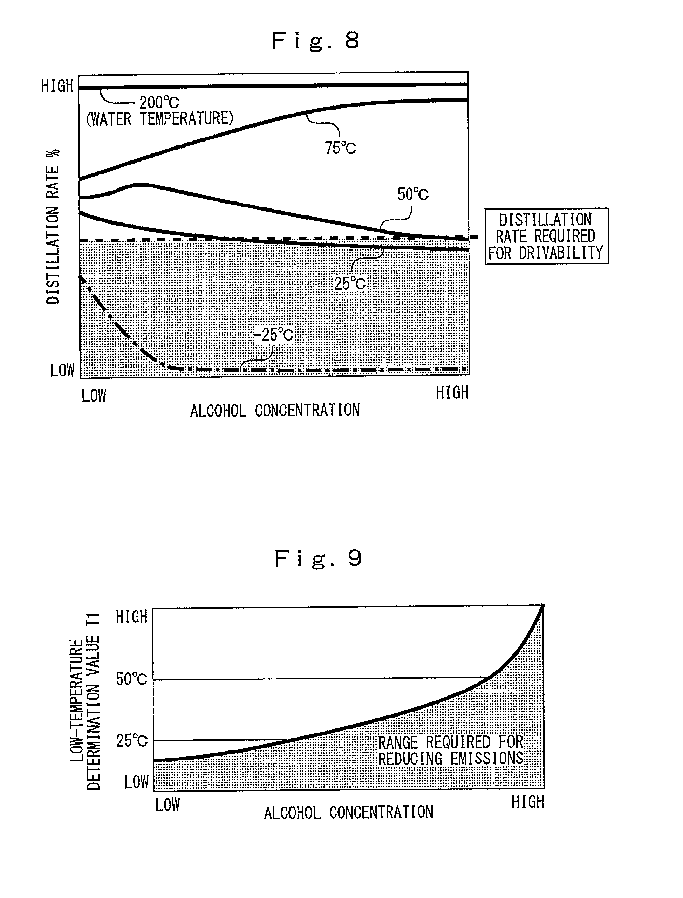

Next, a method of setting the low-temperature determination value T1 will be described referring to Figure 8 and Figure 9. Figure 8 is a characteristics diagram that illustrates alcohol distillation rates at respective water temperatures and alcohol concentrations. Figure 9 is a characteristics diagram illustrating the relation between the alcohol concentration in the fuel and the low-temperature determination value. When using alcohol fuel, it is difficult for injected fuel to vaporize, and particularly during cold operation, the fuel injection amount increases, and consequently the discharged amount of unburned alcohol increases and NMOG emissions deteriorate. In such a case, the proportion by which to increase the fuel injection amount to secure the requested torque can be calculated based on the data shown in Figure 8 based on the water temperature (or oil temperature) as the engine temperature and the alcohol concentration in the fuel.

In Figure 8, when an alcohol distillation rate that is calculated based on the characteristic line in Figure 8 based on the current water temperature and alcohol concentration is lower than a distillation rate required to ensure the drivability (distillation rate required for drivability shown in Figure 8), exhaust emissions are liable to deteriorate. If the IVO passes the in-cylinder turbulence deterioration point in this state, there will be a marked deterioration in the exhaust emissions. According to the present embodiment, to avoid such a situation, the low-temperature determination value T1 is set based on the data in Figure 8 and the like. The low-temperature determination value T1 is a value that corresponds to a water temperature (emissions deterioration water temperature) at which a deterioration in the emissions exceeds an allowable range, and is set, for example, as shown in Figure 9 based on the alcohol concentration in the fuel. As shown in Figure 9, the low-temperature determination value T1 is set to a progressively higher temperature as the alcohol concentration in the fuel increases.

### (First intake valve retarded-opening permission control)

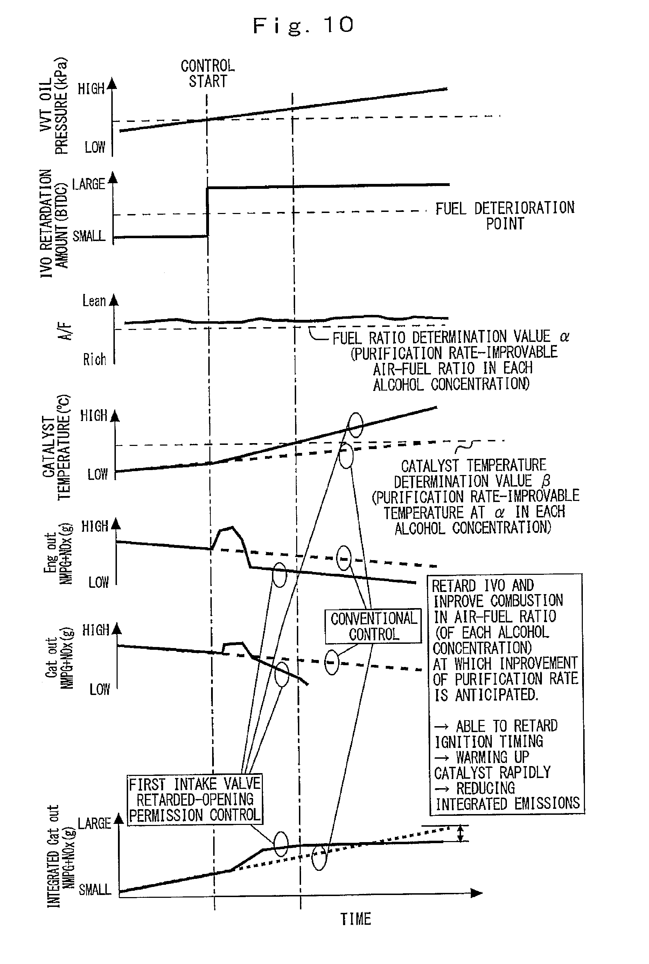

In the present embodiment, a configuration is adopted that executes first and second intake valve retarded-opening permission control that are described hereunder. The first intake valve retarded-opening permission control will be described first. In a case where it is estimated that the exhaust air-fuel ratio will fall within a predetermined air-fuel ratio range in which purification by the catalysts 24 and 26 is possible even if the intake valve retarded-opening control is executed, the first intake valve retarded-opening permission control permits execution of the intake valve retarded-opening control regardless of the level of the engine temperature (water temperature). Figure 10 is a timing chart that illustrates one example of a state in which the intake valve retarded-opening control is permitted by the first intake valve retarded-opening permission control. According to the present control, even if the water temperature Thw is less than or equal to the low-temperature determination value T1, if the exhaust air-fuel ratio is within an air-fuel ratio range in which it is possible to permit a deterioration in the combustion properties that is caused by the intake valve retarded-opening control, the intake valve retarded-opening control can be executed. It is thereby possible to quickly warm up the catalysts while suppressing a deterioration in the exhaust emissions. Accordingly, an operating range in which it is possible to execute the intake valve retarded-opening control can be extended, and the engine performance can be improved during cold operation.

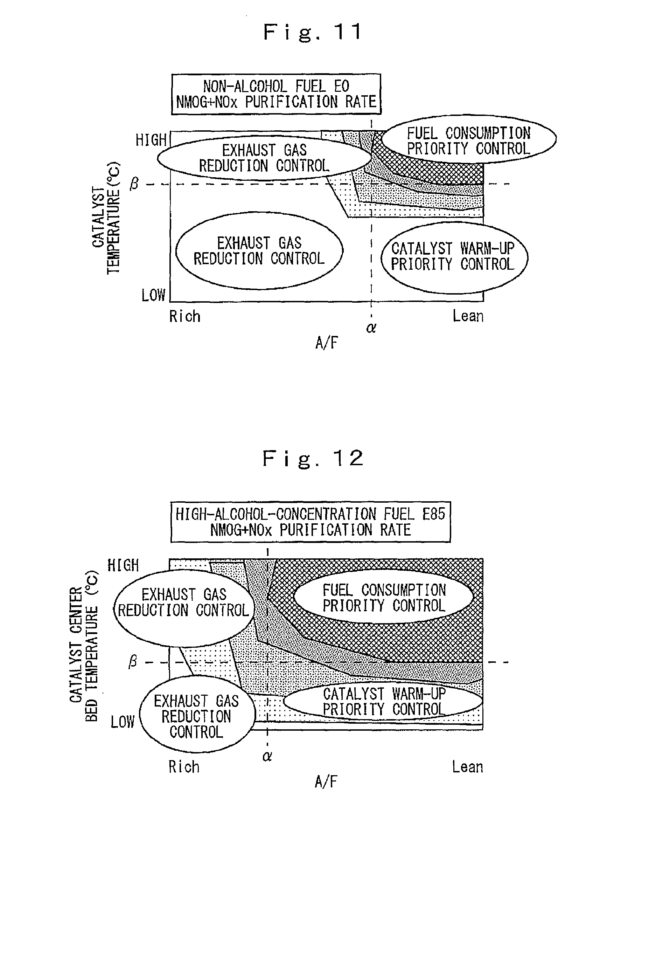

Here, an example of a control region of the intake valve retarded-opening control according to the present embodiment, including the above described "predetermined air-fuel ratio range", will be described. Figure 11 is an explanatory view that illustrates valve timing control and exhaust emissions (NMOG + NOx emissions) in respective operating ranges when using non-alcohol fuel. Figure 12 is an explanatory view that illustrates valve timing control and exhaust emissions in respective operating ranges when using high-alcohol-concentration fuel (for example, a fuel E85 in which the alcohol concentration is 85%). In Figures 11 and 12, the operating ranges are set based on the exhaust air-fuel ratio (A/F) and the catalyst temperature (bed temperature), and are depicted such that, the higher that a NMOG + NOx purification rate is in a region, the denser that a filled-in pattern for the relevant region is in the drawings.

As shown in Figure 11 and Figure 12, in the present embodiment, for example, the operating range is divided into three ranges based on an air-fuel ratio determination value α and a catalyst temperature determination value β, and valve timing control that is suitable for the respective regions is executed. The air-fuel ratio determination value α is set, for example, as a lower limit (largest value on the rich side) of the air-fuel ratio range at which the NMOG + NOx purification rate of a catalyst can satisfy a request. Further, the catalyst temperature determination value β is set, for example, as a lower limit of a catalyst temperature at which the NMOG + NOx purification rate of a catalyst can satisfy a request. The valve timing control in each region will now be described specifically. First, in a case where the current exhaust air-fuel ratio is on the rich side relative to the air-fuel ratio determination value α, since an effect that reduces tailpipe emissions (NMOG + NOx emissions) that is produced by warming up the catalysts is small, regardless of the size of the catalyst temperature determination value β, the valve timing control transitions to exhaust gas reduction control that reduces the amount of exhaust gas.

Further, in a case where the exhaust air-fuel ratio is on the lean side relative to the air-fuel ratio determination value α and the catalyst temperature is higher than the catalyst temperature determination value β, the catalyst is activated, and an effect that reduces the exhaust gas amount or reduces tailpipe emissions by warming up the catalysts is small. In this case, the valve timing control transitions to fuel consumption priority control that prioritizes the improvement of fuel consumption. In the fuel consumption priority control, the IVO is advanced (intake valve is opened early) and the EVC is retarded (exhaust valve is closed late) to thereby increase the valve overlap period. As a result, at a time of discharging gas, unburned gas is caused to flow back to the intake port and a differential pressure between the in-cylinder pressure and the intake pipe pressure (≈ pressure in the crank chamber) can be reduced, and a pumping loss of the piston can be decreased to thereby improve the fuel consumption.

On the other hand, in a case where the exhaust air-fuel ratio is on the lean side relative to the air-fuel ratio determination value α and the catalyst temperature is less than or equal to the catalyst temperature determination value β, the amount by which tailpipe emissions are reduced by warming up the catalysts is large. In such case, even if the combustion properties (exhaust emissions) deteriorate as the result of executing the aforementioned intake valve retarded-opening control, it is estimated that the amount of deterioration can be absorbed by the purification capability of the catalysts. Therefore, in this case the intake valve retarded-opening control is executed to execute catalyst warm-up priority control that prioritizes warming up of the catalysts, and the exhaust valve early-closing control is prohibited. That is, in the first intake valve retarded-opening permission control, "a case where it is estimated that the exhaust air-fuel ratio will fall within a predetermined air-fuel ratio range in which purification by the catalysts is possible even if the intake valve retarded-opening control is executed" corresponds to "a case where the exhaust air-fuel ratio is on the lean side relative to the air-fuel ratio determination value α" and, in Figure 11 and Figure 12, corresponds to a range in which the NMOG + NOx purification rate is high.

As will be understood from the above description, although a condition for executing the first intake valve retarded-opening permission control may be "a case where the exhaust air-fuel ratio is on the lean side relative to the air-fuel ratio determination value α", in a stricter sense it is preferable that the aforementioned condition is "a case where the exhaust air-fuel ratio is on the lean side relative to the air-fuel ratio determination value α, and the catalyst temperature is less than or equal to the catalyst temperature determination value β".

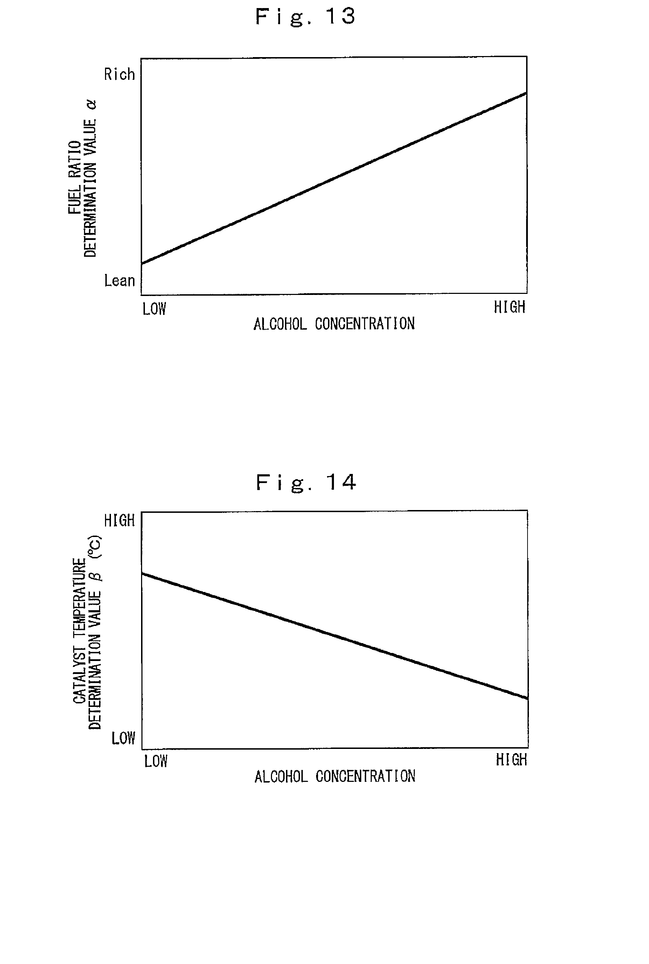

Next, the air-fuel ratio determination value α and the catalyst temperature determination value β will be described. Figure 13 is a characteristics diagram illustrating the relation between the air-fuel ratio determination value α and an alcohol concentration in the fuel. Figure 14 is a characteristics diagram illustrating the relation between the catalyst temperature determination value β and the alcohol concentration. Note that these drawings illustrate one example of the characteristics, and the present invention is not limited by these drawings. As will be understood from the above described Figure 11 and Figure 12, the air-fuel ratio determination value α has a characteristic such that the higher that the alcohol concentration is, the more that the air-fuel ratio determination value α changes to the rich side.

Further, as shown in Figure 14, the catalyst temperature determination value β has a characteristic such that the higher that the alcohol concentration in the fuel is, the more that the catalyst temperature determination value β decreases. The reason for this will now be described. It is known that, generally, a temperature at which purification by a catalyst starts is roughly equal to the activation temperature (approximately 300°C). However, when using alcohol fuel, which is fuel that contains oxygen, there is a tendency for a NMOG purification temperature to decrease, particularly in a case where the alcohol concentration is high. It is estimated that this phenomenon arises because when the catalyst temperature reaches the decomposition temperature of alcohol, oxidation of exhaust components is promoted by oxygen produced from the alcohol component in the fuel. Consequently, the catalyst temperature determination value β that is the lower limit of a temperature range in which the catalyst satisfies the purification rate decreases as the alcohol concentration increases.

### (Second intake valve retarded-opening permission control)

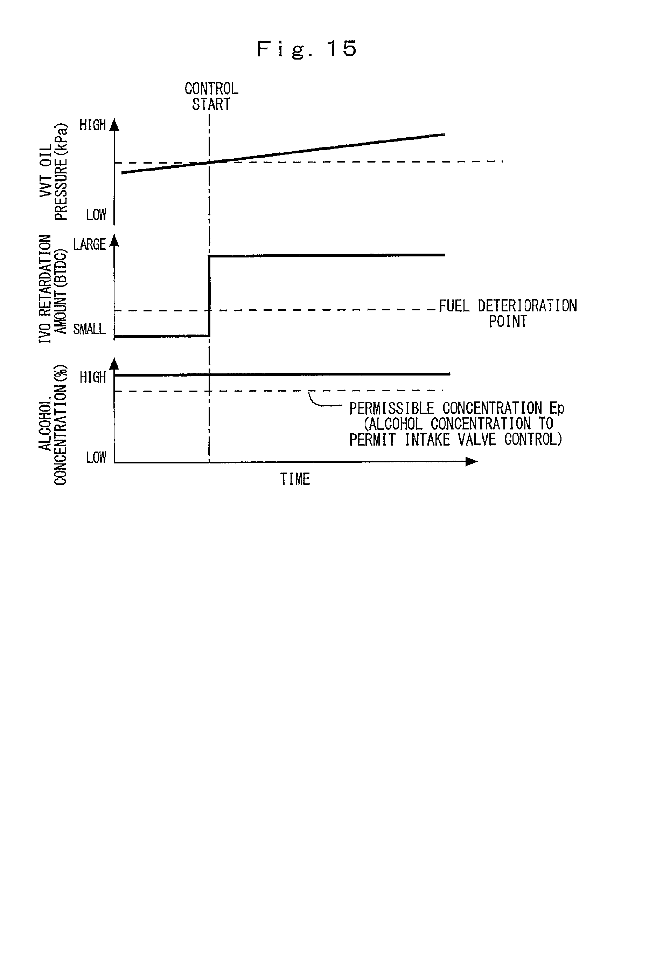

As described in the foregoing, when the alcohol concentration in the fuel is high, oxidation of exhaust components is promoted by oxygen produced from the alcohol component. Therefore, the second intake valve retarded-opening permission control is configured to permit execution of intake valve retarded-opening control when the water temperature is higher than the low-temperature determination value T1 and the alcohol concentration in the fuel is equal to or greater than a predetermined permissible concentration Ep that is set based on the exhaust emissions. Figure 15 is a timing chart that illustrates one example of a state in which the intake valve retarded-opening control is permitted by the second intake valve retarded-opening permission control in Embodiment 1 of the present invention.

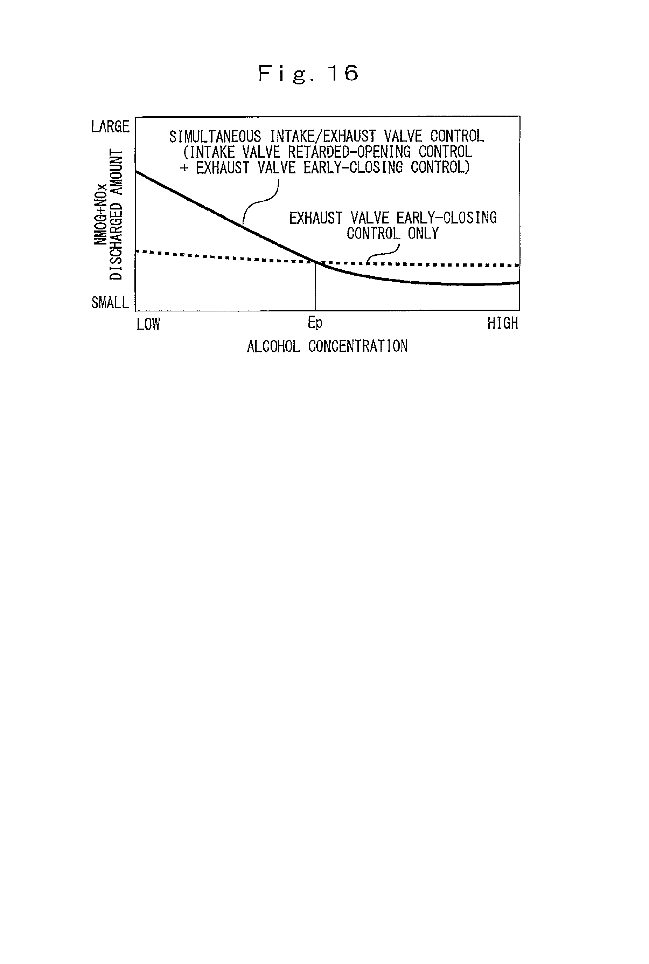

The above described permissible concentration Ep is determined based on the exhaust emissions and, for example, is set as an alcohol concentration value at which the effectiveness of the effect that lowers exhaust emissions that is produced by the intake valve retarded-opening control is greater than a deterioration in the combustion properties that is caused by the same control. Figure 16 is a characteristics diagram for determining a permissible concentration for the intake valve retarded-opening control. As shown in Figure 16, when executing the intake valve retarded-opening control, since the exhaust emissions also deteriorate accompanying a deterioration in the combustion properties, in a case where the alcohol concentration in the fuel is low, there is a tendency for the exhaust emissions to improve more when the exhaust valve early-closing control is executed alone than when the simultaneous intake/exhaust valve control is executed.

However, the above described tendency is improved by the above described oxidation as the alcohol concentration in the fuel increases, and in a case where the alcohol concentration exceeds the permissible concentration Ep, better exhaust emissions are obtained when the simultaneous intake/exhaust valve control is executed in comparison to when only the exhaust valve early-closing control is executed. Therefore, when only the characteristics shown in Figure 16 are taken into consideration, it is preferable to execute the intake valve retarded-opening control (simultaneous intake/exhaust valve control) in a case where the alcohol concentration in the fuel is equal to or greater than the permissible concentration Ep, and to prohibit the intake valve retarded-opening control and execute only the exhaust valve early-closing control in a case where the alcohol concentration is less than the permissible concentration Ep.

According to the present control, even if the combustion properties deteriorate due to execution of the intake valve retarded-opening control, the intake valve retarded-opening control can be executed in a case where an effect of reducing the exhaust emissions that is obtained by the same control is greater than the effect of the deterioration in the combustion properties. It is thereby possible to quickly warm up the catalysts while suppressing a deterioration in the exhaust emissions. Accordingly, an operating range in which it is possible to execute the intake valve retarded-opening control can be extended, and the engine performance during cold operation can be improved.

### (Processing when switching control)

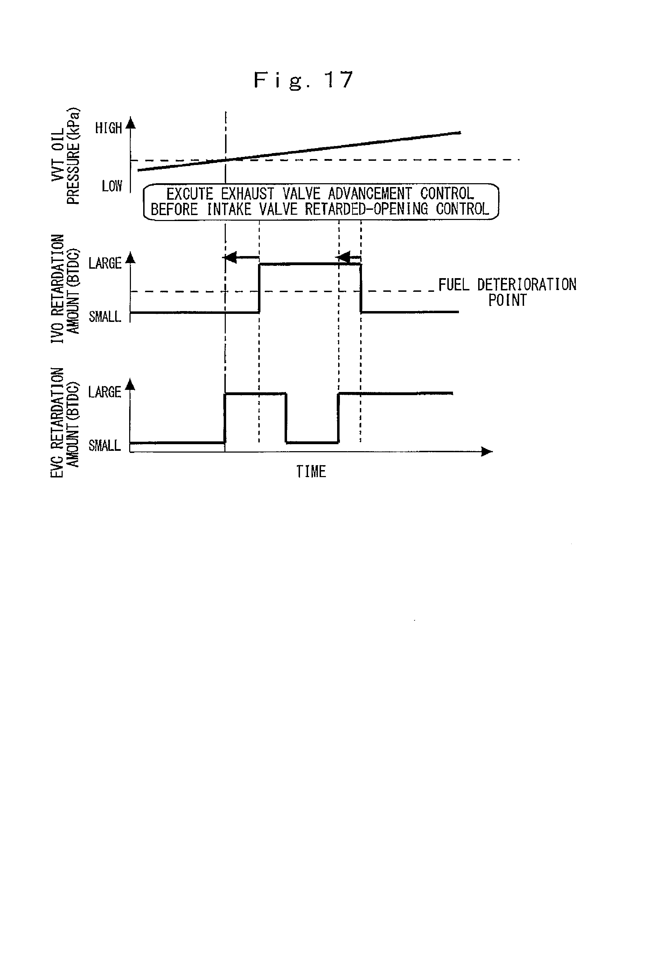

In the present embodiment, when starting the intake valve retarded-opening control, exhaust valve advancement control is executed in synchrony therewith by means of the first and second intake valve retarded-opening permission control. Figure 17 is a timing chart that illustrates one example of the exhaust valve advancement control that is executed in synchrony with the intake valve retarded-opening control. As shown in Figure 17, in the exhaust valve advancement control, a valve timing (at least the EVC) of the exhaust valve is advanced before the intake valve retarded-opening control is started. Further, after an operation to start the intake valve retarded-opening control (operation that changes the valve timing to the retardation side) is completed, the EVC is returned to the timing thereof before the EVC was advanced.

Note that, when executing the simultaneous intake/exhaust valve control, it is sufficient to maintain the advanced timing of the EVC upon completing the operation to start the intake valve retarded-opening control after the EVC was advanced prior to retardation of the IVO. Further, in the present invention, the exhaust valve advancement control may also be executed when ending the intake valve retarded-opening control, and not only when starting the intake valve retarded-opening control. In such a case, it is sufficient to advance the EVC before an operation to end the intake valve retarded-opening control is performed that returns the IVO to the timing thereof before retardation, and to return the EVC to the original timing thereof after the operation to end the intake valve retarded-opening control is completed.

According to the above described exhaust valve advancement control, even in a case where the combustion properties deteriorate more than expected as the result of executing the intake valve retarded-opening control, the valve timing of the exhaust valve can be advanced to suppress a deterioration in the exhaust emissions. That is, exhaust emissions can be improved by an amount corresponding to the amount by which the valve timing of the exhaust valve is advanced, and consequently the operating range in which the intake valve retarded-opening control is executable can be extended.

### [Specific processing for realizing Embodiment 1]

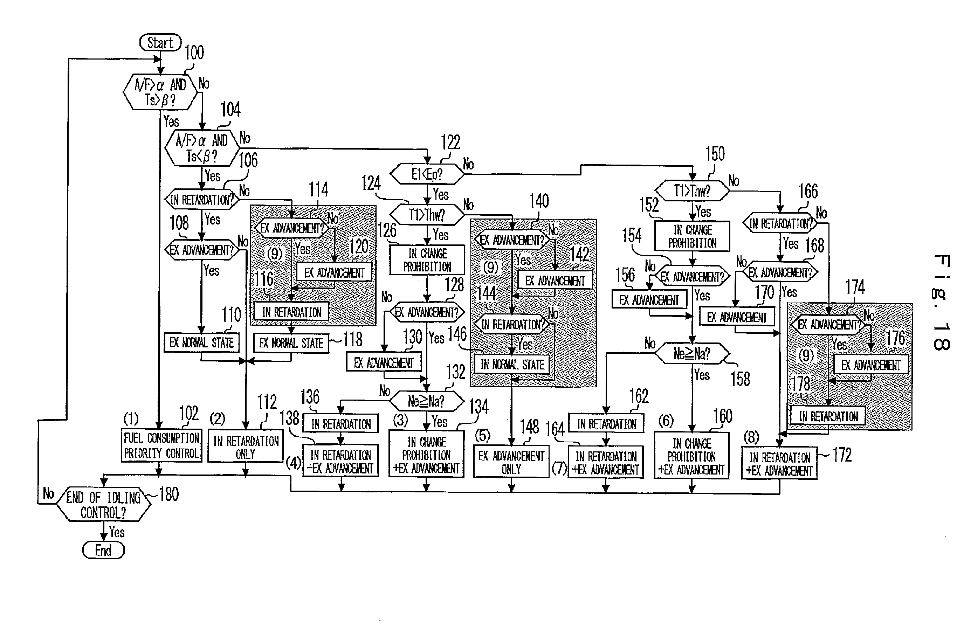

Next, specific processing for implementing the above described control will be described referring to Figure 18. Figure 18 is a flowchart that illustrates control executed by the ECU according to Embodiment 1 of the present invention. It is assumed that the routine shown in Figure 18 is repeatedly executed during operation of the engine. In the routine shown in Figure 18, first, after reading the output of each sensor, in step 100, the ECU 60 determines whether or not the air-fuel ratio is greater than the air-fuel ratio determination value (the air-fuel ratio is on the lean side relative to the air-fuel ratio determination value) and the catalyst temperature Ts is higher than the catalyst temperature determination value β.

If the result determined in step 100 is affirmative, the processing shifts to step 102 in which the ECU 60 executes (1) fuel consumption priority control (see Figure 11 and Figure 12). On the other hand, if the result determined in step 100 is negative, in step 104, the ECU 60 determines whether or not the air-fuel ratio is on the lean side relative to the air-fuel ratio determination value α, and the catalyst temperature Ts is lower than the catalyst temperature determination value β.

If the result determined in step 104 is affirmative, the ECU 60 executes catalyst warm-up priority control by (2) prohibiting exhaust valve early-closing control and executing only intake valve retarded-opening control. In this case, first, in step 106, the ECU 60 determines whether or not the intake valve retarded-opening control (In retardation) is being executed. If the aforementioned control is being executed, in step 108 the ECU 60 determines whether or not the exhaust valve early-closing control (Ex advancement) is being executed. If the result determined in step 108 is affirmative, since the simultaneous intake/exhaust valve control is being executed, in step 110 the ECU 60 ends the exhaust valve early-closing control and returns the valve timing (at least the EVC) of the exhaust valve 34 to a normal state (a similar timing as in the conventional technology), and in step 112 the ECU 60 continues the intake valve retarded-opening control. On the other hand, if the result determined in step 108 is negative, since the state is one in which only the intake valve retarded-opening control is being executed, the processing shifts directly to step 112.

If the result determined in step 106 is negative, since the intake valve retarded-opening control is not being executed, the processing shifts to step 114 in which the ECU 60 determines whether or not the exhaust valve early-closing control is being executed. If the result of this determination is affirmative, since the exhaust valve early-closing control is already being executed, first, the ECU 60 starts the intake valve retarded-opening control by executing step 116. Thereafter, in step 118, similarly to the processing in step 110, the ECU 60 ends the exhaust valve early-closing control. Further, if the result determined in step 114 is negative, since the exhaust valve early-closing control is not being executed, the ECU 60 (9) starts the intake valve retarded-opening control while executing the exhaust valve advancement control. In the exhaust valve advancement control, first, the ECU 60 advances the EVC by executing step 120, and after completing an operation to start the intake valve retarded-opening control by executing step 116, the ECU 60 executes step 118 to return the EVC to the state thereof before advancement.

On the other hand, if the result determined in step 104 is negative, the processing shifts to step 122 in which the ECU 60 determines whether or not the alcohol concentration E1 in the fuel is lower than the aforementioned permissible concentration Ep. If the result determined in step 122 is affirmative, next, in step 124, the ECU 60 determines whether or not the water temperature Thw is lower than the low-temperature determination value T1. If the result determined in step 124 is affirmative, first, the processing shifts to step 126 in which the ECU 60 prohibits a change of displacement of the intake valve (In change prohibition). Next, in step 128, the ECU 60 determines whether or not the exhaust valve early-closing control is being executed. If the result determined in step 128 is negative, the ECU 60 executes the exhaust valve early-closing control by executing step 130, and thereafter the processing shifts to step 132.

In step 132, the ECU 60 determines whether or not a number of engine revolutions Ne is equal to or greater than a predetermined number of idling revolutions Na. If the result determined in step 132 is affirmative, in step 134 the ECU 60 (3) prohibits a change of displacement of the intake valve, including the intake valve retarded-opening control, and maintains a state in which the exhaust valve early-closing control is executed. On the other hand, if the result determined in step 132 is negative, the ECU 60 executes intake valve retarded-opening control by executing step 136. Since a state is thereby entered in which (4) simultaneous intake/exhaust valve control (In retardation + Ex advancement) is executed, the state is maintained in step 138.

Further, if the result determined in step 124 is negative, in step 140, the ECU 60 determines whether or not the exhaust valve early-closing control is being executed. If the result determined in step 140 is negative, the ECU 60 executes the exhaust valve early-closing control by executing step 142, and thereafter the processing shifts to step 144. In step 144, the ECU 60 determines whether or not intake valve retarded-opening control is being executed. If the result determined in step 144 is affirmative, the ECU 60 ends (prohibits) the intake valve retarded-opening control by executing step 146, and returns the valve timing of the intake valve 32 to a normal state. As a result, in step 148, since a state is entered in which (5) only the exhaust valve early-closing control is executed, the ECU 60 maintains the state.

On the other hand, in step 122, if it is determined that the alcohol concentration E1 in the fuel is equal to or greater than the permissible concentration Ep, the processing shifts to step 150 in which the ECU 60 determines whether or not the water temperature Thw is lower than the low-temperature determination value T1. If the result determined in step 150 is affirmative, in steps 152 to 164 the ECU 60 executes the same processing as in the aforementioned steps 126 to 138. That is, if the number of engine revolutions Ne is equal to or greater than the number of idling revolutions Na under a condition in which the alcohol concentration E1 is equal to or greater than the permissible concentration Ep and, furthermore, the water temperature Thw is lower than the low-temperature determination value T1, the ECU 60 (6) prohibits a change of displacement of the intake valve, including the intake valve retarded-opening control, and maintains a state in which the exhaust valve early-closing control is executed. Further, if the number of engine revolutions Ne is less than the number of idling revolutions Na under the aforementioned condition, the ECU 60 (7) executes the simultaneous intake/exhaust valve control.

In addition, in a case where the result determined in step 150 is negative, that is, in a case where the water temperature Thw is equal to or greater than the low-temperature determination value T1, the processing shifts to step 166 in which the ECU 60 determines whether or not the intake valve retarded-opening control is being executed. If the result determined in step 166 is affirmative, in step 168 the ECU 60 determines whether or not the exhaust valve early-closing control is being executed. If the result determined in step 168 is negative, the ECU 60 executes step 170 to thereby execute the exhaust valve early-closing control, and thereafter the processing shifts to step 172. As a result, in step 172, since a state is entered in which (8) the simultaneous intake/exhaust valve control is executed, the ECU 60 maintains the state. In contrast, if the result determined in step 166 is negative, the processing shifts to step 174 in which the ECU 60 determines whether or not the exhaust valve early-closing control is being executed. If the result determined in step 174 is negative, the ECU 60 executes the intake valve retarded-opening control by executing step 178 while executing the exhaust valve advancement control by executing step 176, and thereafter the processing shifts to step 172.

After executing steps 102, 112, 134, 138, 148, 160, 164, or 172, the processing shifts to step 180 in which the ECU 60 determines whether or not a condition for ending idling control has been established. If the result determined in step 180 is affirmative, the ECU 60 ends the present routine. If the result determined in step 180 is negative, the ECU 60 returns to step 100 to repeat execution of the present routine.

The routine illustrated in Figure 18 may be summarized as follows:
(1) The fuel consumption priority control is executed in a case where the exhaust air-fuel ratio is on the lean side relative to the air-fuel ratio determination value α and the catalyst temperature Ts is higher than the catalyst temperature determination value β.
(2) The intake valve retarded-opening control is executed in a case where the exhaust air-fuel ratio is on the lean side relative to the air-fuel ratio determination value α and the catalyst temperature Ts is less than or equal to the catalyst temperature determination value β.
(3 and 6) In a case where the exhaust air-fuel ratio is on the rich side relative to the air-fuel ratio determination value α and the water temperature Thw is less than or equal to the low-temperature determination value T1, a change of displacement of the intake valve, including the intake valve retarded-opening control, is prohibited and the exhaust valve early-closing control is executed.
(4 and 7) The intake valve retarded-opening control is executed in a case where the condition in the above described (3 or 6) is established and the number of engine revolutions Ne is lower than the number of idling revolutions Na.
(5) In a case where the exhaust air-fuel ratio is on the rich side relative to the air-fuel ratio determination value α, the water temperature is equal to or less than the low-temperature determination value T1, and the alcohol concentration E1 in the fuel is lower than the permissible concentration Ep, the intake valve retarded-opening control is prohibited and the exhaust valve early-closing control is executed.
(8) In a case where the exhaust air-fuel ratio is on the rich side relative to the air-fuel ratio determination value α, the water temperature Thw is equal to or less than the low-temperature determination value T1, and the alcohol concentration E1 in the fuel is equal to or greater than the permissible concentration Ep, the simultaneous intake/exhaust valve control is executed.
(9) When starting and ending the intake valve retarded-opening control, the exhaust valve advancement control is executed prior to operations to start and end the relevant control, and starting and ending of the intake valve retarded-opening control is performed in a state in which the EVC is advanced.

As described in detail above, according to the present embodiment the valve timings of the intake valve 32 and the exhaust valve 34 can be appropriately controlled based on a fuel property and the engine temperature, and exhaust emissions and catalyst warm-up performance can be thereby improved.

Note that, in the foregoing Embodiment 1, step 112 in Figure 18 represents a specific example of intake valve control means in claim 1, and step 148 in Figure 18 represents a specific example of exhaust valve control means. Further, steps 124 and 150 and Figure 9 represent a specific example of low-temperature determination value varying means in claim 1, and steps 134 and 160 represent specific examples of intake valve control prohibiting means and exhaust valve control permitting means. Furthermore, step 112 represents a specific example of intake valve control permitting means in claim 2, and step 172 represents a specific example of intake valve control permitting means in claim 3. In addition, steps 114, 116, 118 and 120 represent a specific example of exhaust valve advancement control means in claim 4.

Further, the foregoing Embodiment 1 has been described by taking a hydraulic VVT or the like as an example of the variable valve mechanisms 36 and 38. However, the present invention is not limited thereto, and the present invention can be widely applied to various kinds of variable valve mechanisms that make a valve timing variable, including a swing-arm type variable valve mechanism and an electromagnetically-driven valve mechanism. Further, although in Embodiment 1 the water temperature Thw was described as an example of the engine temperature, the present invention is not limited thereto, and an oil temperature or the like may be used as the engine temperature.

In Embodiment 1 a case in which the catalyst temperature Ts is detected by the catalyst temperature sensor 50 was described as an example. However, the present invention is not limited thereto, and for example a configuration may also be adopted that does not use the catalyst temperature sensor 50, and that estimates the actual catalyst temperature based on a parameter in which the operating state of the engine is reflected. More specifically, for example, the introduced energy can be calculated based on an integrated value of the intake air amount (integrated intake air amount) and the exhaust air-fuel ratio, and the catalyst temperature can be estimated based on the introduced energy. An estimated value of the catalyst temperature calculated in this manner may also be adopted as the catalyst temperature Ts.

Furthermore, although in Embodiment 1 a configuration is adopted that uses the main air-fuel ratio sensor 46, the present invention is not limited thereto, and for example the air-fuel ratio may be determined based on the output of the sub-O₂ sensor 48. In addition, in the present invention a configuration may be adopted that does not use the alcohol concentration sensor 52, and that estimates the alcohol concentration in the fuel based on learning results with respect to the air-fuel ratio or the like.

### Description of Reference Numerals

10 engine (internal combustion engine), 12 piston, 14 combustion chamber, 16 crankshaft, 18 intake passage, 20 exhaust passage, 22 throttle valve, 24, 26 catalyst, 28 fuel injection valve, 30 spark plug, 32 intake valve, 34 exhaust valve, 36 intake variable valve mechanism, 38 exhaust variable valve mechanism, 40 crank angle sensor, 42 airflow sensor, 44 water temperature sensor, 46 main air-fuel ratio sensor, 48 sub-O₂ senso, 50 catalyst temperature sensor, 52 alcohol concentration sensor, 60 ECU

## Claims

1. A control device for an internal combustion engine, comprising:
an intake variable valve mechanism for changing a valve timing of an intake valve;
an exhaust variable valve mechanism for changing a valve timing of an exhaust valve;
engine temperature acquisition means for acquiring an engine temperature of the internal combustion engine;
intake valve control means for executing intake valve control that drives the intake variable valve mechanism to change a valve timing of the intake valve;
exhaust valve control means for executing exhaust valve control that drives the exhaust variable valve mechanism to change a valve timing of the exhaust valve;
low-temperature determination value varying means for variably setting a low-temperature determination value based on a fuel property;
intake valve control prohibiting means for prohibiting execution of the intake valve control in at least a case where the engine temperature is less than or equal to the low-temperature determination value; and
exhaust valve control permitting means for permitting execution of the exhaust valve control in at least a case where the engine temperature is less than or equal to the low-temperature determination value.

2. The control device for an internal combustion engine according to claim 1, further comprising:
a catalyst that purifies an exhaust gas that is discharged from a cylinder of the internal combustion engine;
exhaust air-fuel ratio acquisition means for acquiring an exhaust air-fuel ratio of the internal combustion engine; and
intake valve control permitting means for, in a case where it is estimated that the exhaust air-fuel ratio will fall within a predetermined air-fuel ratio range in which purification by the catalyst is possible even if the intake valve control is executed, permitting execution of the intake valve control regardless of the engine temperature.

3. The control device for an internal combustion engine according to claim 1 or 2, further comprising:
alcohol concentration acquiring means for acquiring an alcohol concentration in a fuel; and
intake valve control permitting means for permitting execution of the intake valve control in a case where the engine temperature is higher than the low-temperature determination value and the alcohol concentration is greater than or equal to a predetermined permissible concentration that is set based on exhaust emissions.

4. The control device for an internal combustion engine according to claim 2 or 3, further comprising exhaust valve advancement control means for, in a case of executing the intake valve control, advancing a valve timing of the exhaust valve before the intake valve control is started, and after an operation to start the intake valve control is completed, returning the valve timing of the exhaust valve to a timing thereof prior to the advancing thereof.

5. The control device for an internal combustion engine according to any one of claims 1 to 4, wherein the intake valve control is control that retards at least an opening timing of the intake valve, and the exhaust valve control is control that advances at least a closing timing of the exhaust valve.
